# EUROPEAN PATENT SPECIFICATION

(11) **EP 2 199 558 B1**
(45) Date of publication and mention of the grant of the patent: **07.09.2011**
(21) Application number: 09178344.9
(22) Date of filing: 08.12.2009
(51) Int. Cl.: F01N 5/02, F01N 3/20

(54) **Active Buoyant Urea Heater**
Aktiver schwimmender Harnstofferhitzer
Chauffage d'urée actif flottant

(30) Priority: 17.12.2008 US 337136
(43) Date of publication of application: 23.06.2010
(73) Proprietor: Delphi Technologies, Inc., Troy, MI 48007 (US)
(72) Inventor: Li, Bob X., Grand Blanc, MI 48439 (US); Lecea, Oscar A., Grand Blanc, MI 48439 (US); Goulette, David A., Marine City, MI 48039 (US); McClanahan, Mark R., Goodrich, MI 48438 (US)
(74) Representative: Denton, Michael John

(56) References cited:
- WO-A1-2007/017080
- WO-A1-2008/138960
- DE-A1- 2 031 028
- US-A1- 2008 264 044

## Description

### TECHNICAL FIELD

The present invention relates to heating urea in a storage vessel that is mounted to a vehicle, and in particular varying buoyancy of a heater within the storage vessel.

### BACKGROUND OF THE INVENTION

One method of diesel exhaust aftertreatment involves using a urea SCR system to treat the diesel exhaust. A urea and water solution is injected into a hot exhaust pipe. Hydrolysis causes ammonia to form ahead of the SCR catalyst converter. Ammonia thus reacts with NO2 trapped on the catalyst to form N₂ and CO₂. The result is a clean up of the diesel exhaust. However at temperatures below minus 11C°, the urea solution freezes into solid ice.

A thermal heating system can be used to thaw the solid ice into a liquid solution for an on-board-vehicle pump to draw the liquid urea into the exhaust pipe for the exhaust aftertreatment. A specified amount of urea must be available in the proximity of the heater and the fluid pickup tube. This is accomplished by using a container within the tank that holds the heater and a required volume of urea. The level of the inner tank is the same as the outer tank unless some type of pump and check valve system is used to bring the level of the inner tank higher than the outer tank.

To date, fixed heaters have been implemented in various configurations in order to melt the urea within the container. By placing a fixed heater within the container, such as in the bottom, the cyclic operation of thawing and refreezing only a portion of the urea can lead to an air gap forming between the thawed urea and the frozen urea above it as the container is depleted. Also the effectiveness of the fixed heater becomes less as the thawing of the urea continues up from the bottom and the distance to the frozen portion of urea gets larger.

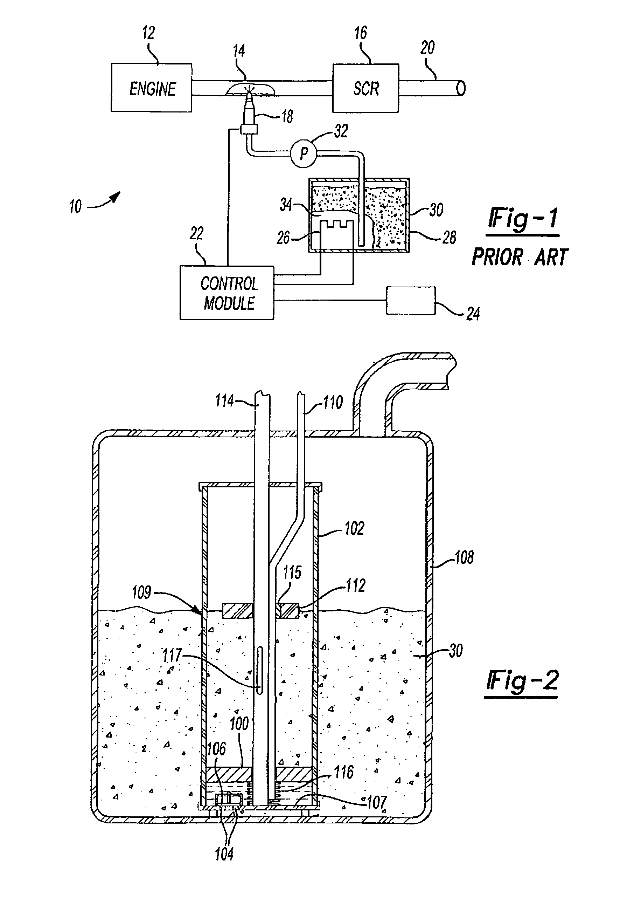

Referring now to FIG. 1, a functional block diagram is shown of a diesel engine exhaust treatment system 10 in accordance with the prior art. A diesel engine 12 generates exhaust gas. An exhaust pipe 14 transports the exhaust gas to a selective catalyst reactant (SCR) catalyst converter 16.

Exhaust system 10 also includes a urea injection system. The urea injection system includes an injector 18 that injects a urea and water solution 30 into the exhaust stream upstream of SCR catalyst converter 16. A hydrolysis reaction converts solution 30 into ammonia upstream of SCR catalyst converter 16. The ammonia reacts with NO trapped in SCR catalyst converter 16 to form N₂ and CO₂ which are released to the atmosphere via a tailpipe 20.

A control module 22 controls injector 18 to regulate a flow rate of solution 30. Control module 22 may also receive a temperature signal from a temperature sensor 24 and control a heater 26. A container 28 stores solution 30. A pump 32 pumps solution 30 to injector 18. In some embodiments control module 22 controls pump 32. In some embodiments temperature sensor 24 is positioned in solution 30. In some embodiments temperature sensor 24 is positioned in ambient air and control module 22 estimates the temperature of solution 30 based on the ambient air temperature.

Solution 30 freezes below a predetermined temperature, such as -11 degrees Celsius. Heater 26 may be used to thaw frozen solution 30 so that it may be pumped and injected into the exhaust stream. Thawing frozen solution 30 can cause a void 34 to form between heater 26 and the remaining frozen solution 30. In some situations void 34 can become large enough to insulate frozen solution 30 from heater 26. Heater 26 is then ineffective at thawing solution 30 and liquid solution 30 becomes unavailable for helping to reduce tailpipe emissions.

### SUMMARY OF THE INVENTION

A variable buoyancy heater is provided. It comprises variable buoyancy float that includes a variable volume element. A first fluid is contained within the variable volume element and a heating element that is integral with the variable buoyancy float is provided. The heater is arranged to heat the first fluid wherein the variable volume element expands based on a temperature increase from the heating element, such that the variable buoyancy float becomes positively buoyant when the variable volume element expands and negatively buoyant when the heating element is off.

A method of generating a supply of liquid urea solution is also provided. It comprises providing a variable buoyancy heater including a heating element into a liquid urea solution. After the urea solution freezes the heater is energized in the frozen urea solution. Buoyancy of the variable buoyancy heater is increased such that it floats on melted urea solution created by the heating element until melting of frozen urea solution is complete. The method further includes deenergizing the heating element and decreasing the buoyancy of the variable buoyancy heater and allowing said heater to sink in liquid urea solution.

A variable buoyancy heater is provided. It comprises, a variable buoyancy float that includes at least one variable volume bladder. A heating element that is integrated with the variable buoyancy float is also provided. The heater has an on position and an off position. The variable volume bladder is deflated while said heating element is in the off position and inflated while the heating element is in said on position.

Further areas of applicability of the present disclosure will become apparent from the detailed description provided hereinafter. It should be understood that the detailed description and specific examples are intended for purposes of illustration only and are not intended to limit the scope of the invention.

### BRIEF DESCRIPTION OF THE DRAWINGS

The present disclosure will become more fully understood from the detailed description and the accompanying drawings, wherein:

FIG 1 is a functional block diagram of a urea injection system in accordance with the prior art;

FIG 2 is a cross section of a urea container that includes an active buoyant urea heater;

FIG 3 is a cross section of an active buoyant urea heater;

FIG 4 is a plan view of an active buoyant urea heater that includes bimetal disks;

FIGS 5A and 5B are cross sections of the heater of FIG 4 during heater off and heater on modes, respectively;

FIG 6 is a plan view of an active buoyant urea heater that includes air bladders; and

FIGS 7A and 7B are cross sections of the heater of FIG 6 during air bladder inflated and deflated modes, respectively;

### DESCRIPTION OF THE PREFERRED EMBODIMENTS

As used herein, the term module refers to an Application Specific Integrated Circuit (ASIC), an electronic circuit, a processor (shared, dedicated, or group) and memory that execute one or more software or firmware programs, a combinational logic circuit, and/or other suitable components and equivalents that provide the described functionality.

Referring now to FIG 2, a cross section is shown of a urea solution reservoir 102. Reservoir 102 includes a variable buoyancy heater 100. Variable buoyancy heater 100 is captured within reservoir 102 and may be activated to thaw a frozen urea and water solution 30. Variable buoyancy heater 100 also includes an element for varying its buoyancy such that variable buoyancy heater 100 sinks in liquid solution 30 and then floats during a heating and thawing process. Floating allows variable buoyancy heater 100 to remain more proximate to the bottom of frozen solution 30 than heaters of the prior art. The closer proximity of variable buoyancy heater 100 to frozen solution 30 may also allow variable buoyancy heater 100 to thaw solution 30 at a sufficient rate while employing less electrical power than the prior art. The sufficiency of the thaw rate may be determined by the flow rate of liquid solution 30 that is needed to satisfy exhaust limits of a vehicle and/or engine that is associated with reservoir 102.

Operation of variable buoyancy heater 100 will now be described. When solution 30 is in a liquid state, variable buoyancy heater 100 sinks to the bottom of reservoir 102. The sinking is accomplished by decreasing the buoyancy of variable buoyancy heater 100 as described below in more detail. Thereafter, when solution 30 freezes, it traps variable buoyancy heater 100 at the bottom of reservoir 102.

Upon starting of a vehicle that is associated with frozen urea solution 30, a heating element within variable buoyancy heater 100 is switched to the on position. The heating element thaws solution 30, which then collects at the bottom 107 of reservoir 102, and thus underneath variable buoyancy heater 100. As the temperature of variable buoyancy heater 100 increases, urea melts and collects at the bottom 107 of reservoir 102. The buoyancy of variable buoyancy heater 100 causes heater 100 to float on thawed solution 30. As such, variable buoyancy heater 100 maintain proximity to frozen solution 30 that is above variable buoyancy heater 100. Variable buoyancy heater 100 continues to float upward to melt solution 30 that is in the upper portion 109 of tank 108 until it reaches the surface of solution 30.

When the heating element is turned off, as will be discussed later herein, the buoyancy of variable buoyancy heater 100 decreases, causing heater to sink in thawed solution 30. As such, heater 100 is in a proper position wherein solution 30 may then refreeze over variable buoyancy heater 100, and the aforementioned heating and thawing process may be repeated.

Reservoir 102 may include one or more openings 104. Openings 104 allow liquid solution 30 to enter reservoir 102 from holding tank 108. A check valve 106 may be employed to prevent solution 30 from flowing out of reservoir 102 and back into holding tank 108, thus maintaining a ready supply of liquid solution 30. A pickup tube 110 extends to the bottom 107 of reservoir 102. Pickup tube 110 is employed to draw thawed urea solution 30 from the bottom 107 of reservoir 102 and supply urea solution 30 to the injection exhaust system.

As shown in FIG 2, reservoir 102 also includes a level sensor arrangement 111 comprising a sensor float 112. Sensor float 112 may receive and traverse a predetermined length of a sensor tube 114 in accordance with the level of solution 30. Sensor float 112 includes a magnet 115 that switches at least one reed switch 117 that is enclosed in sensor tube 114. The at least one reed switch 117 is electrically connected with corresponding resistances such that opening and closing of the at least one reed switch 117 provides a varying resistance that corresponds with the level of solution 30. It should be appreciated that many other level sensing methods may be used or substituted in reservoir 102 or a level sensing function may be omitted.

A power cable 116 is employed to provide electrical power to variable buoyancy heater 100. At one end power cable 116 is connected to heater 100. At the other end power cable connects to a power source (not shown) by running through sensor tube 114.

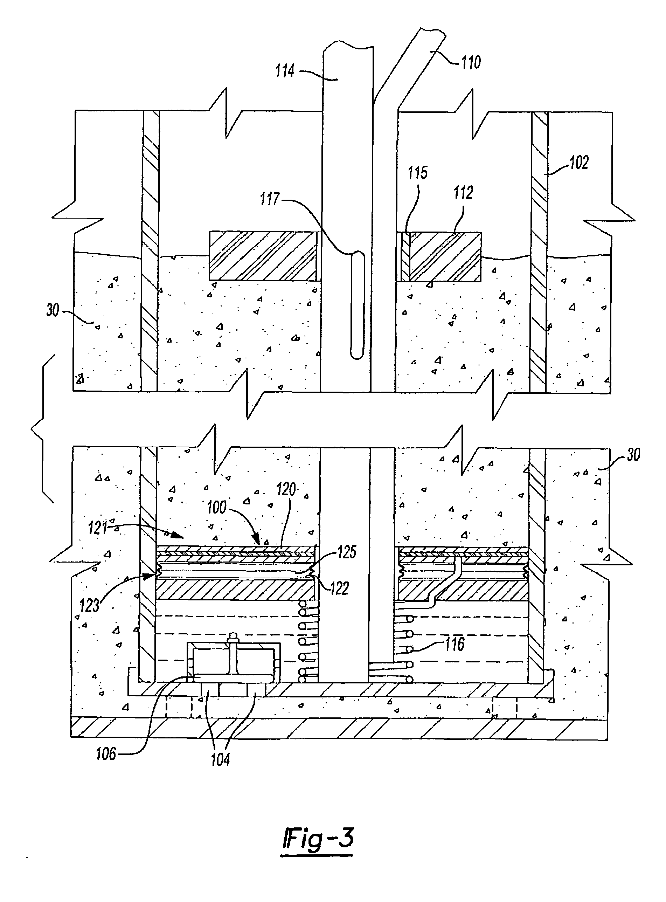

The heater and buoyancy changing elements of buoyant variable buoyancy heater 100 will now be described in more detail. Referring now to FIG 3, one of several embodiments contemplated is shown. Variable buoyancy heater 100 includes a heating element 120 located at an upper portion 121 of heater 100, powered through coiled power cable 116. However, heating element 120 may comprise any of a number of suitable heating elements. As shown, heating element 120 is a thick-film resistive heater or other suitable heater.

Variable buoyancy heater 100 also comprises a float 123 with a variable volume element 122. Variable volume element 122 encloses a fluid, such as a gas or liquid, that facilitates selectively increasing and decreasing the buoyancy of variable buoyancy heater 100. A flexible bladder, such as bellows 125 comprises, a portion of variable volume element 122.

Enclosed within bellows 125 is a heat conducting medium such as oil. As the oil is heated by heating element 120 it expands inside variable volume element 122 thus pushing out and expanding bellows 125. Therefore, the displacement of variable volume element 122 increases, resulting in the entirety of variable buoyancy heater 100 becoming more buoyant. An immediate benefit of the increased volume of variable buoyancy heater 100 is to increase distribution of heat over the entire variable buoyancy heater 100 surface, thus increasing by both convection and conduction the effectiveness of the surface area of variable buoyancy heater 100 for thawing frozen urea solution 30.

In an alternative embodiment, buoyancy of variable buoyancy heater 100 is varied by a fluid within bellows 125 that changes density with temperature, such that the density of the variable buoyancy heater 100 decreases as it is heated, , thus becoming less dense than the urea solution 30 within which variable buoyancy heater 100 is placed.

Regardless of the heat conducting medium used, when variable volume element 122 increases, then variable buoyancy heater 100 becomes positively buoyant in liquid urea solution 30. However, when variable volume element 122 decreases, then variable buoyancy heater 100 become negatively buoyant and will sink in liquid urea solution 30. As the variable buoyancy heater 100 rises, the frozen urea solution 30 above is efficiently thawed by maintaining intimate contact between the heating element 120 of variable buoyancy heater 100 and the frozen urea solution 30. If the vehicle is turned off before variable buoyancy heater 100 has thawed the entirety of reservoir 102, variable buoyancy heater 100 will cool before the thawed urea 30 refreezes. Thus, variable buoyancy heater 100 sinks back to the bottom 107 and resets for the next freeze/thaw cycle..

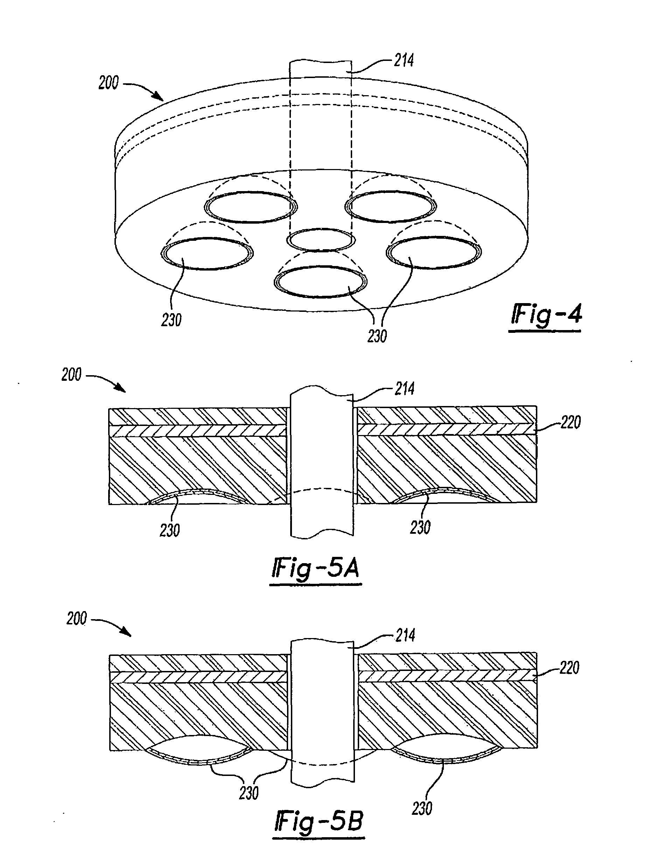

Referring now to FIG 4, another embodiment is shown of a variable buoyancy heater 200 that includes a plurality of temperature sensitive bimetal disks 230. It will be appreciated that bimetal strips may be a suitable substitute for bimetal disks 230. When bimetal disks 230 are below a predetermined temperature they assume a concave shape as shown in FIG 5A. When a heater 220 is energized, heat conduction causes bimetal disks 230 to heat as well. Once bimetal disks 230 are heated to a predetermined temperature they will change into the convex shape as shown in FIG 5B. The convex shape causes variable buoyancy heater 200 to displace more volume within a urea solution 30. Therefore, the buoyancy of heater 200 changes so that it traverses along a sensor tube 214, and it floats on to the top of the liquid urea solution 30.

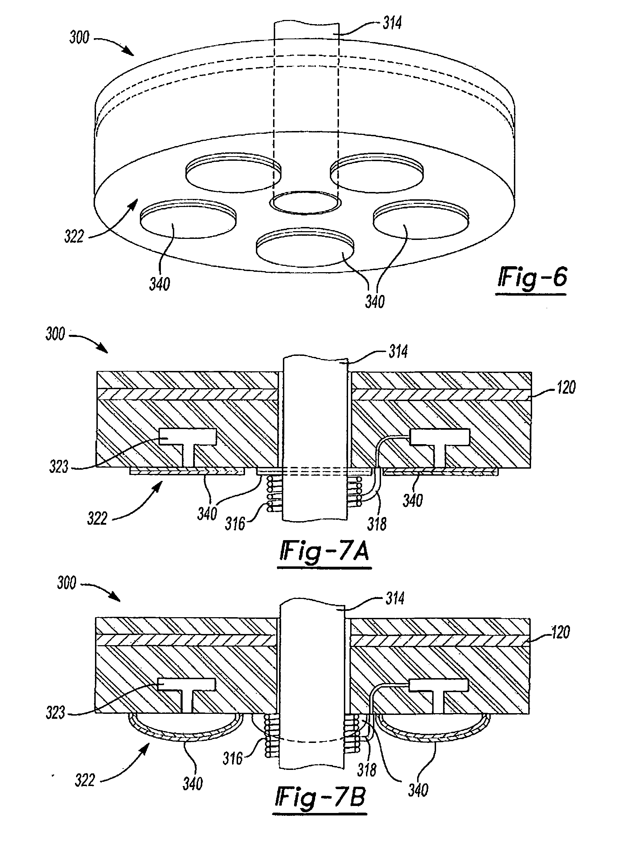

Referring now to FIG 6, yet another embodiment is shown of a variable buoyancy heater 300. Variable buoyancy 300 traverses along sensor tube 314 and includes a plurality of air bladders 340 as a part of a variable volume element 322. As shown in FIG 7B, each air bladder 340 is filled with air or any alternative gas, to increase the buoyancy of variable buoyancy heater 300. Conversely, as shown in FIG 7A, air may be evacuated from air bladders 340 to reduce the buoyancy of variable buoyancy heater 300. Variable volume element 322 includes an air pump (not shown), used to fill and evacuate air bladders 340. A flexible air supply line 318, is disposed between the air pump and an air reservoir 323 located within variable buoyancy heater 300. Air bladders 340 are filled by air supply 318, which is routed adjacent to power cable 316. Air is evacuated from bladders 340 by vacuum caused by the air pump, and drawing air through supply line 318. However, it will be appreciated that air may be injected and evacuated from air bladders 340 in any number of convential ways.

## Claims

1. A variable buoyancy heater (100), **characterized by**:
a variable buoyancy float (123) that includes a variable volume element (122, 322);
a first fluid within the variable volume element; and
a heating element (120, 220) that is integral with the variable buoyancy float (123) and arranged to heat the first fluid, wherein the variable volume element (122, 322) expands based on a temperature increase from said heating element (120, 220), such that the variable buoyancy float (123) becomes positively buoyant when the variable volume element (122, 322) expands and negatively buoyant when the heating element (120, 220) is off.

2. The variable buoyancy heater of claim 1, further comprising a variable volume bladder (125, 230) that encloses at least a portion of the variable volume element (122, 322) and retains said first fluid.

3. The variable buoyancy heater of claim 1 or claim 2, wherein said first fluid is oil, or a liquid that expands when heated, or a gas.

4. The variable buoyancy heater of claim 1, wherein the variable volume element (122, 322) comprises at least one variable volume bladder (340).

5. The variable buoyancy heater of claim 4, wherein said variable volume bladder (340) is alternately inflated and deflated with a gas.

6. The variable buoyancy heater of claim 5, wherein said gas is supplied and extracted from said variable volume bladder (340) through a supply line (318) connected to said bladder (340).

7. The variable buoyancy heater of claim 5, including a plurality of variable volume bladders (340) dispose on said float (112).

8. The variable buoyancy heater of any one of claims 1 to 7, wherein said variable volume element (122, 322) includes at least one bimetal disk (230) having a first displacement when said heater (220) is off and having a second displacement when said heater is turned on.

9. The variable buoyancy heater of any one of claims 1 to 8, wherein said heater (120, 220) is a thick film resistance heater.

10. A method of generating a supply of liquid urea solution, comprising:
providing a variable buoyancy heater (100) including a heating element (120, 220) into a liquid urea solution;
allowing said urea solution to freeze;
energizing said heating element in said variable buoyancy heater in said frozen urea solution;
increasing said buoyancy of said variable buoyancy heater such that it floats on melted urea solution created by said heating element until melting of frozen urea solution is complete;
de-energizing said heating element; and
decreasing said buoyancy of said variable buoyancy heater allowing said heater to sink.

11. The method of claim 10, wherein increasing the buoyancy comprises increasing a volume of said variable buoyancy heater (300).

12. The method of claim 10, wherein increasing the buoyancy comprises supplying a volume of gas to a variable volume element (322) of said variable buoyancy heater (300).

13. The method of claim 10, wherein decreasing the buoyancy comprises decreasing a volume of a variable volume element (322) of said variable buoyancy heater (300).

14. The method of claim 10, wherein decreasing the buoyancy comprises reducing a volume of gas in a variable volume element (322) of said variable buoyancy heater (300).

## Patentansprüche

1. Heizvorrichtung mit variablem Auftrieb (100), die **gekennzeichnet ist durch**:
einen Schwimmer mit variablem Auftrieb (123), der ein variables Volumenelement (122, 322) umfasst;
ein erstes Fluid in dem variablen Volumenelement; und
ein Heizelement (120, 220), das mit dem Schwimmer mit variablem Auftrieb (123) integral ist und ausgebildet ist zum Erwärmen des ersten Fluids, wobei sich das variable Volumenelement (122, 322) basierend auf einem Temperaturanstieg von dem Heizelement (120, 220) ausdehnt, so dass der Schwimmer mit variablem Auftrieb (123) einen positiven Auftrieb hat, wenn sich das variable Volumenelement (122, 322) ausdehnt, und einen negativen Auftrieb hat, wenn das Heizelement (120, 220) ausgeschaltet ist.

2. Heizvorrichtung mit variablem Auftrieb gemäß Anspruch 1, die weiter eine Blase mit variablem Volumen (125, 230) aufweist, die zumindest einen Teil des variablen Volumenelements (122, 322) umschließt und das erste Fluid enthält.

3. Heizvorrichtung mit variablem Auftrieb gemäß Anspruch 1 oder Anspruch 2, wobei das erste Fluid Öl oder eine Flüssigkeit, die sich bei Erwärmung ausdehnt, oder ein Gas ist.

4. Heizvorrichtung mit variablem Auftrieb gemäß Anspruch 1, wobei das variable Volumenelement (122, 322) zumindest eine Blase mit variablem Volumen (340) aufweist.

5. Heizvorrichtung mit variablem Auftrieb gemäß Anspruch 4, wobei die Blase mit variablem Volumen (340) abwechselnd mit Gas aufgeblasen und entleert wird.

6. Heizvorrichtung mit variablem Auftrieb gemäß Anspruch 5, wobei das Gas an die Blase mit variablem Volumen (340) geliefert wird oder daraus entfernt wird durch eine Versorgungsleitung (318), die mit der Blase (340) verbunden ist.

7. Heizvorrichtung mit variablem Auftrieb gemäß Anspruch 5, einschließlich einer Vielzahl von Blasen mit variablem Volumen (340), die an dem Schwimmer (112) angeordnet sind.

8. Heizvorrichtung mit variablem Auftrieb gemäß einem der Ansprüche 1 bis 7, wobei das variable Volumenelement (122, 322) zumindest eine Bimetall-Scheibe (230) umfasst, die eine erste Verdrängung hat, wenn die Heizvorrichtung (220) ausgeschaltet ist, und eine zweite Verdrängung hat, wenn die Heizvorrichtung angeschaltet ist.

9. Heizvorrichtung mit variablem Auftrieb gemäß einem der Ansprüche 1 bis 8, wobei die Heizvorrichtung (120, 220) eine Dickschichtwiderstandsheizvorrichtung ist.

10. Verfahren zum Erzeugen eines Vorrats von flüssiger Harnstofflösung, das aufweist:
Vorsehen einer Heizvorrichtung mit variablem Auftrieb (100) mit einem Heizelement (120, 220) in einer flüssigen Harnstofflösung;
Ermöglichen, dass die Harnstofflösung einfriert;
Betreiben des Heizelements in der Heizvorrichtung mit variablem Auftrieb in der gefrorenen Harnstofflösung;
Erhöhen des Auftriebs der Heizvorrichtung mit variablem Auftrieb derart, dass sie auf der geschmolzenen Harnstofflösung schwimmt, die durch das Heizelement erzeugt wird, bis ein Schmelzen der gefrorenen Harnstofflösung abgeschlossen ist;
Abschalten des Heizelements; und
Verringern des Auftriebs der Heizvorrichtung mit variablem Auftrieb, wodurch die Heizvorrichtung sinken kann.

11. Verfahren gemäß Anspruch 10, wobei ein Erhöhen des Auftriebs aufweist ein Erhöhen eines Volumens der Heizvorrichtung mit variablem Auftrieb (300).

12. Verfahren gemäß Anspruch 10, wobei ein Erhöhen des Auftriebs aufweist ein Liefern eines Gasvolumens an ein variables Volumenelement (322) der Heizvorrichtung mit variablem Auftrieb (300).

13. Verfahren gemäß Anspruch 10, wobei ein Verringern des Auftriebs aufweist ein Verringern eines Volumens eines variablen Volumenelements (322) der Heizvorrichtung mit variablem Auftrieb (300).

14. Verfahren gemäß Anspruch 10, wobei ein Verringern des Auftriebs aufweist ein Reduzieren eines Gasvolumens in einem variablen Volumenelement (322) der Heizvorrichtung mit variablem Auftrieb (300).

## Revendications

1. Dispositif chauffant à flottabilité variable (100), **caractérisé par** :
un flotteur à flottabilité variable (123) qui inclut un élément à volume variable (122, 322) ;
un premier fluide dans l'élément à volume variable ; et
un élément chauffant (120, 220) qui est intégré avec le flotteur à flottabilité variable (123) et qui est arrangé pour chauffer le premier fluide, tel que l'élément à volume variable (122, 322) se dilate en se basant sur une augmentation de température de la part dudit élément chauffant (120, 220), de telle façon que le flotteur à flottabilité variable (123) atteint une flottabilité positive quand l'élément à volume variable (122, 322) se dilate et une flottabilité négative quand l'élément chauffant (120, 220) est arrêté.

2. Dispositif chauffant à flottabilité variable selon la revendication 1, comprenant en outre une poche à volume variable (125, 230) qui enferme au moins une portion de l'élément à volume variable (122, 322) et qui retient ledit premier fluide.

3. Dispositif chauffant à flottabilité variable selon la revendication 1 ou 2, dans lequel ledit premier fluide est de l'huile, ou un liquide qui se dilate lorsqu'il est chauffé, ou encore un gaz.

4. Dispositif chauffant à flottabilité variable selon la revendication 1, dans lequel l'élément à volume variable (122, 322) comprend au moins une poche à volume variable (340).

5. Dispositif chauffant à flottabilité variable selon la revendication 4, dans lequel ladite poche à volume variable (340) est alternativement gonflée et dégonflée avec un gaz.

6. Dispositif chauffant à flottabilité variable selon la revendication 5, dans lequel ledit gaz est fourni et extrait de ladite poche à volume variable (340) via une ligne d'alimentation (318) connectée à ladite poche (340).

7. Dispositif chauffant à flottabilité variable selon la revendication 5, incluant une pluralité de poches à volume variable (340) disposées sur ledit flotteur (112).

8. Dispositif chauffant à flottabilité variable selon l'une quelconque des revendications 1 à 7, dans lequel ledit élément à volume variable (122, 322) inclut au moins un disque bimétallique (230) ayant un premier déplacement quand ledit élément chauffant (220) est arrêté et ayant un second déplacement quand ledit élément chauffant est en marche.

9. Dispositif chauffant à flottabilité variable selon l'une quelconque des revendications 1 à 8, dans lequel ledit élément chauffant (120, 220) et un élément chauffant à résistance en film épais.

10. Procédé pour engendrer une fourniture de solution d'urée liquide, comprenant les opérations consistant à :
fournir un dispositif chauffant à flottabilité variable (100) incluant un élément chauffant (120, 220) dans une solution d'urée liquide ;
permettre à ladite solution d'urée de se congeler ;
activer ledit élément chauffant dans ledit dispositif chauffant à flottabilité variable dans ladite solution d'urée congelée ;
augmenter la flottabilité dudit dispositif chauffant à flottabilité variable de telle façon qu'il flotte sur la solution d'urée fondue engendrée par ledit élément chauffant jusqu'à ce que la fusion de la solution d'urée congelée soit terminée ;
désactiver ledit élément chauffant ; et
diminuer ladite flottabilité dudit dispositif chauffant à flottabilité variable en permettant audit dispositif chauffant de s'enfoncer.

11. Procédé selon la revendication 10, dans lequel l'augmentation de la flottabilité comprend d'augmenter un volume dudit dispositif chauffant à flottabilité variable (300).

12. Procédé selon la revendication 10, dans lequel l'augmentation de la flottabilité comprend d'alimenter un volume de gaz vers un élément à volume variable (322) dudit dispositif chauffant à flottabilité variable (300).

13. Procédé selon la revendication 10, dans lequel la diminution de la flottabilité comprend de diminuer un volume d'un élément à volume variable (322) dudit dispositif chauffant à flottabilité variable (300).

14. Procédé selon la revendication 10, dans lequel la diminution de la flottabilité comprend de réduire à volume de gaz dans un élément à volume variable (322) dudit dispositif chauffant à flottabilité variable (300).
